# EUROPEAN PATENT APPLICATION

(11) **EP 2 945 446 A1**
(43) Date of publication of application: **18.11.2015**
(21) Application number: 14290147.9
(22) Date of filing: 16.05.2014
(51) Int. Cl.: H04W 72/04

(54) **Mobile radio telecommunication signal**

(71) Applicant: ALCATEL LUCENT, 92100 Boulogne-Billancourt (FR)
(72) Inventor: Dootsch, Uwe, 70435 Stuttgart (DE); Schalch, Frank, 70435 Stuttgart (DE); Zeller, Dietrich, 70435 Stuttgart (DE); Wild, Thorsten, 70435 Stuttgart (DE); Doll, Mark, 70435 Stuttgart (DE); Santos, André F.d., 70435 Stuttgart (DE); Bakker, Hajo, 70435 Stuttgart (DE); Saur, Stephan, 70435 Stuttgart (DE)
(74) Representative: DREISS Patentanwälte PartG mbB

(57) **Abstract**

It is proposed a mobile radio telecommunication signal (2) to transmit downlink control signaling information specific to a user equipment from a base station to the user equipment according to an encoding scheme based on time and frequency radio resources, the signal (2) comprising: an identification information to identify the user equipment, wherein at least one resource element is exclusively reserved for the identification information; and the downlink control signaling information.

## Description

### Field of the invention

The invention relates to a mobile radio telecommunication signal to transmit downlink control signaling information.

### Background

The Long Term Evolution, LTE, standard provides downlink control signaling for the physical layer and the medium access control layer. A Physical Downlink Control Channel, PDCCH, provides a control region to transmit downlink control signaling. An Enhanced Physical Downlink Control Channel, EPDCCH, provides a small portion of the overall bandwidth to transmit downlink control signaling in a data region. The LTE L1/L2 control channels and random access channels are shared by all users for allocation and control of resources used to communicate data. PDCCH provides that a cyclic redundancy check is attached to each downlink control information, DCI, message payload. The identity of the terminal or terminals addressed is included in the CRC calculation and is not explicitly transmitted.

Also, the orthogonal frequency division multiplex, OFDM, technique is known. In a downlink direction, OFDM as a user-multiplexing scheme implies that, in each OFDM symbol interval, different subsets of the overall set of available subcarriers are used for transmission to different terminals.

### Summary

In view of the prior art, it is an object of the invention to provide a mobile radio telecommunication signal which avoids the disadvantages of the prior art. According to an embodiment, this object is achieved in that the mobile radio telecommunication signal comprises an identification information to identify a user equipment, and a downlink control signaling information. At least one resource element is exclusively reserved for the identification information. This means that the identification information is explicitly transferred to the user equipment which can therefore advantageously identify downlink control signaling information intended for it.

### Brief description of the figures

Further features, aspects and advantages of the present invention are given in the following detailed description with reference to the drawings in which:
- Figure 1: is a schematic depiction of a mobile radio telecommunication signal;
- Figure 2: is a schematic depiction of a mobile radio telecommunication system; and
- Figures 3 to 5: is a schematic depiction of the mobile radio telecommunication signal, respectively.

### Description of the embodiments

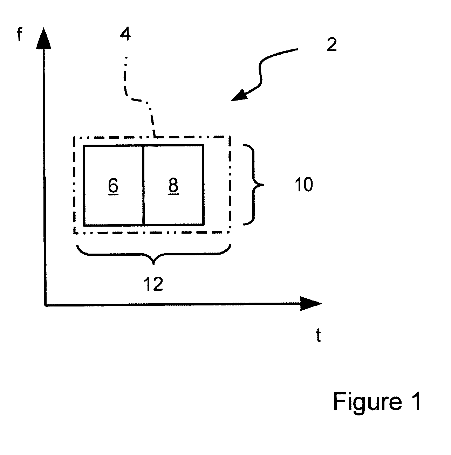

Figure 1 is a schematic depiction of a mobile radio telecommunication signal 2, which is provided to communicate downlink control signaling information specific to a user equipment from a base station to the user equipment according to an encoding scheme based on time and frequency radio resource, for example according to an orthogonal frequency division multiplex, OFDM, encoding scheme. The communication step of the signal 2 comprises a transmission and/or a reception of the signal. The signal 2 comprises in a first sub-block 6 of the resource block 4 an identification information to identify the user equipment.

In an embodiment the encoding scheme is OFDM and the first sub-block 6 and the resource block 4 comprise a plurality of resource elements, each resource element consisting of one subcarrier during one symbol.

In an embodiment the encoding scheme is a spread-spectrum multiple access encoding scheme like the code division multiple access, CDMA, method. CDMA provides the communication of more than one data signals over a common frequency spectrum, especially over a common subcarrier. However, the separation of the data in CDMA is achieved by a modulation scheme different to each transmitter. Therefore, in CDMA the first sub-block 6 and the resource block 4 comprise a plurality of resource elements, each resource element consisting of one subcarrier during one symbol. So, the at least one resource element is exclusively reserved for the identification information, even if communicated over the air interface using the same subcarrier, as the modulation scheme is different for each transmitter, especially a base station.

In an embodiment the encoding scheme is an interleaving domain multiple access, IDMA, method.

In an embodiment the encoding scheme is a beam forming method.

At least one resource element is exclusively reserved for carrying only the identification information for the user equipment and does not comprise any further information. Of course, in an embodiment a plurality of resource elements may be exclusively reserved for the identification information. The signal further comprises in a second sub-block 8 of the resource block 4 the downlink control signaling information.

The resource block 4 comprises a plurality 10 of sub-carriers and a plurality 12 of symbols, for example OFDM symbols. Of course, the resource block 4 may comprise more sub-blocks than the sub-blocks 6 and 8.

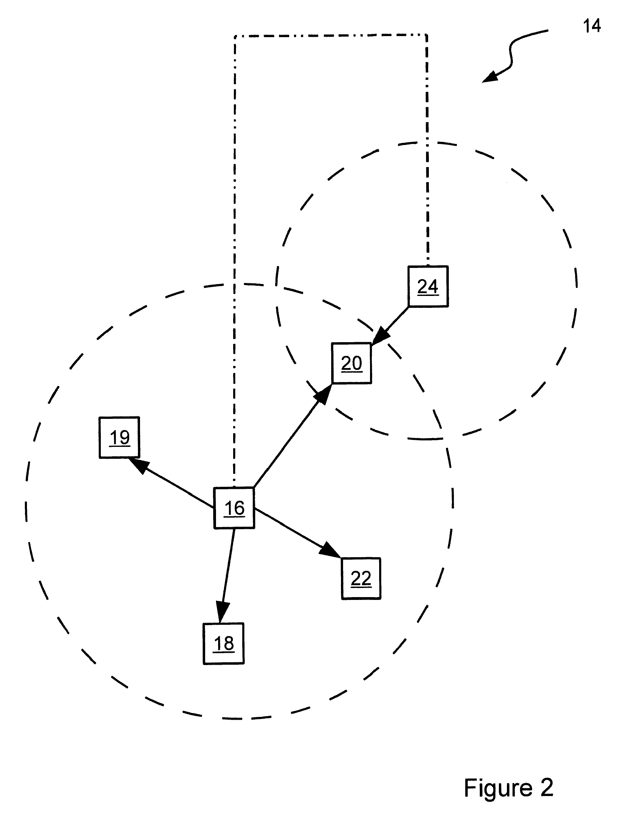

Figure 2 is a schematic depiction of a mobile radio telecommunication system 14. A first base station 16 serves user equipments 18, 19, 20 and 22. A second base station 24 serves the user equipment 20 as the user equipment 20 resides in an overlapping coverage area of the base stations 16 and 24. The base stations 16 and 24 send the mobile radio telecommunication signal 2 to the user equipments 18 to 22 in the respective coverage area.

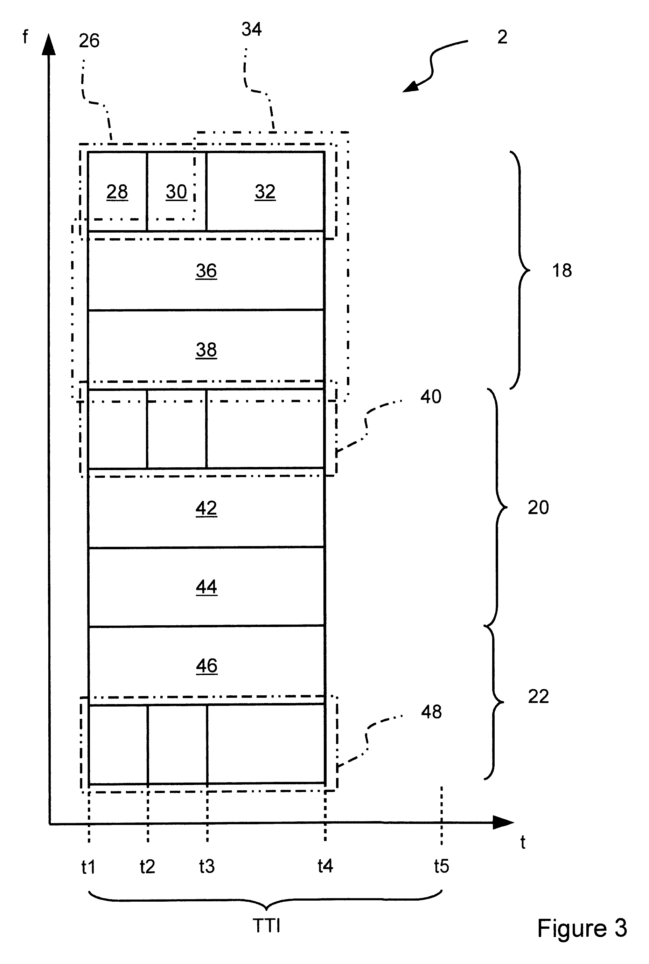

Figure 3 is a schematic depiction of an embodiment of the mobile radio telecommunication signal 2. A resource block 26 comprises a sub-block 28 comprising the identification information. The resource block 26 comprises a sub-block 30 comprising the downlink control signaling information. A further sub-block 32 comprises downlink data for the user equipment identified by the identification information in the sub-block 28. The downlink control signaling information comprises downlink scheduling assignments, especially decoding information for a downlink data part 34 which comprises for example the sub-block 32 and resource blocks 36 and 38.

In an initial registration of the user equipment at the respective base station or cell, the base station assigns the identification information to the respective user equipment to distinguish the different user equipment in the cell.

At the initial registration or in an update process the base station informs the user equipment about a search space. The search space defines positions in time and frequency for the user equipment to search for the exclusively reserved at least one resource element comprising its identification information. Based on the identification information the respective user equipment detects that the following downlink control information is intended for the user equipment.

The identification information precedes the downlink control signaling information in time according to the sub-blocks 28, 30. Furthermore, first symbols of an sub-frame and/or of a transmission time interval, TTI, comprise the identification information. This allows user equipments which are not addressed by the identification information to go into a wait mode or sleep mode to save energy, especially battery power.

The resource blocks 26, 36 and 38 are dedicated to the user equipment 18. Further resource blocks 40, 42, 44 are dedicated to a user equipment 20. Further resource blocks 46 and 48 are dedicated to a user equipment 22, wherein in another embodiment the blocks 46 and 48 may interchanged in the frequency domain to provide a structure like the resource blocks 40, 42 and 44. The blocks 40 and 48 provide a structure similar to that of block 26.

The transmission of an identification information for a respective user equipment enables virtualization on control channel level. Virtualization on control channel level allows agile, nearly instantaneous and tailored deployment of applications and services in response to arising and changing user needs. Therefore it is possible to provide networking services for different user groups and organizations on a common infrastructure in form of base stations, giving each of these groups and organizations the experience of a dedicated private network secured against any impact from the usage of other networks used by other groups.

The presented mobile radio communication signal 2 allows that wireless infrastructures can be shared in a secure way between different organizations like public safety organizations and smartphone users belonging to the group of consumers. The mobile radio communication signal 2 supports to provide different services and device classes. Also an adaption of the control channel provided by the signal 2 in the future is very easy.

The signal 2 also provides support for interference coordination in the form that two base stations which serve an overlapping area may negotiate to use different resource blocks. This provides separation of the respective cells.

The signal 2 also provides joint transmission by a plurality of base stations to one or more user equipments. For example a Multiple Input Multiple Output, MIMO, transmission scheme may be applied, wherein several base stations submit resource blocks with the same or nearly the same content.

The signal 2 also provides support for downlink controlling information with user equipment specific format and content.

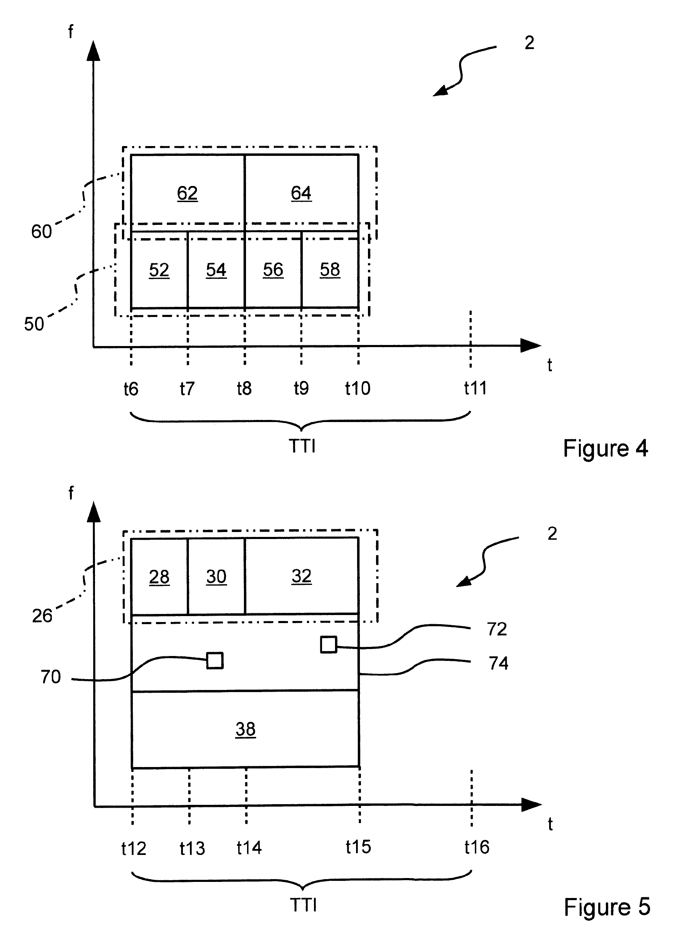

Figure 4 is a schematic depiction of an embodiment of the mobile radio telecommunication signal 2. A plurality of identification informations of respective user equipments are arranged in an resource block 50 which is, at least partly exclusively reserved to transfer only the identification information. The resource block 50 comprises sub-blocks 52, 54, 56 and 58. Each of the sub-blocks 52, 54, 56 and 58 comprises a respective identification information. For an uplink grant specific time and frequency resources according to the resource block 50 and a further resource block 60 are reserved. The user equipment has to search the whole TTI and a micro sleep for example is not possible. However, for an upload grant which was requested by the user equipment a micro sleep is not relevant. So the micro sleep feature is not important in the upload grant case. The control part is user equipment specific, can be defined service and device classes dependent and resides for example in the resource block 60. Two sub-blocks 62 and 64 provide control information for a respective user equipment.

A plurality of identification informations are arranged consecutively in time in the block 50. The respective downlink control signaling informations is also arranged consecutively in time.

Figure 5 is a schematic depiction of an embodiment of the mobile radio telecommunication signal 2. An acknowledgement information 70, 72, especially of a hybrid automatic repeat request, HARQ, protocol, of an uplink transmission, is included at a user equipment specific position in time and frequency in an resource block 74. The acknowledgement information may comprise a bit-wise positive acknowledgment, ACK, or a negative acknowledgement, NAK. In an embodiment the acknowledgment information may comprise a multi-level feedback comprising more than one bit.

In an embodiment the user equipment specific position in time and frequency of the acknowledgement information is provided within the downlink control signaling information in the sub-block 30 for the downlink data part. The specific position provides advantageously that HARQ feedback and other downlink transmission can be sufficiently separated in the code and/or spatial dimension, and the reliability of the whole downlink signaling information is improved. To decode the feedback the user equipment may use common reference symbols which are anyway used for channel measurement (frequency selective CQI feedback).

In an embodiment only the existence of acknowledgement information in the downlink data part is provided within the downlink control signaling information in the sub-block 30 for the downlink data part.

In an embodiment acknowledgement information in the downlink data part is provided without an indication of its existence in the downlink control signaling information in the sub-block 30 for the downlink data part.

In an embodiment the acknowledgement information, especially of a hybrid automatic repeat request, HARQ, protocol, of an uplink transmission, is included in a relative change of a first symbol to a subsequent second symbol, especially included in an resource block by a differential modulation function of the base station.

Advantageously, in case of small control elements, for example in form of single bits, which are not located in terms of time-frequency position near other chunks of data and pilots, the differential modulation is applicable. This allows omitting pilot symbols, as absolute information on the channel transfer function and thus the equalized modulation symbols are not required any more. The acknowledgement information is contained in the relative change of subsequent modulation symbols. A corresponding multi-carrier design tailored to the targeted propagation channel ensures that neighbored resource elements of an block have a highly correlated channel transfer functions. With reference to the preceding figures a search space for a respective user equipment comprises a position in time and a position in frequency. A specific user equipment may expect its identification in the search space provided by the base station. The search space may also comprise a plurality of positions in time and/or a plurality of positions in frequency. Furthermore, a function may be provided to calculate the respective search space. The search space therefore provides an adaptive and flexible solution to support different device and service classes. For example, search space of a battery limited machine type device may occur rather rarely to maximize its sleep time. By a respective configuration the interference coordination is supported, e.g., through non-overlapping search spaces for two nearby user equipments in adjacent cells.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A mobile radio telecommunication signal (2) to transmit downlink control signaling information specific to a user equipment (18-22) from a base station (16, 24) to the user equipment (18-22) according to an encoding scheme based on time and frequency radio resources, the signal (2) comprising: an identification information to identify the user equipment (18-22), wherein at least one resource element is exclusively reserved for the identification information; and the downlink control signaling information.

2. The mobile radio telecommunication signal (2) according to claim 1, wherein the identification information and the downlink control signaling information are arranged in a resource block (26).

3. The mobile radio telecommunication signal (2) according to claim 1 or 2, wherein the at least one resource element exclusively reserved for the identification information precedes the downlink control signaling information in time.

4. The mobile radio telecommunication signal (2) according to one of the preceding claims, wherein first symbols of a sub-frame and/or of a transmission time interval, TTI, comprise the at least one resource element exclusively reserved for the identification information.

5. The mobile radio telecommunication signal (2) according to one of the preceding claims, wherein the downlink control signaling information comprises downlink scheduling assignments, especially decoding information for a downlink data part (34).

6. The mobile radio telecommunication signal (2) according to one of the preceding claims, wherein an acknowledgement information (70, 72), especially of a hybrid automatic repeat request, HARQ, protocol, of an uplink transmission, is included at a user equipment (18-22) specific position in time and frequency.

7. The mobile radio telecommunication signal (2) according to claim 5 and 6, wherein the user equipment (18-22) specific position in time and frequency of the acknowledgement information is provided within the downlink control signaling information for the downlink data part (34).

8. The mobile radio telecommunication signal (2) according to one of the preceding claims, wherein an acknowledgement information (70, 72), especially of a hybrid automatic repeat request, HARQ, protocol, of an uplink transmission, is included in a relative change of a first resource element to a subsequent second resource element, especially included in a resource block by a differential modulation function of the base station.

9. The mobile radio telecommunication signal (2) according to one of the preceding claims, wherein a plurality of identification informations of respective user equipments (18-22) are arranged in a first resource block (50), and wherein a plurality of downlink control signaling informations are arranged in a second resource block (60), and/or
wherein the downlink control signaling informations comprise uplink scheduling grant information for the respective user equipment (18-22).

10. The mobile radio telecommunication signal (2) according to claim 9, wherein the identification informations are arranged consecutively in time, and wherein the respective downlink control signaling informations are arranged consecutively in time.

11. The mobile radio telecommunication signal (2) according to one of the preceding claims, wherein the number of downlink sub-carriers and the number of downlink symbols for the identification information depends on the radio coverage area and/or on the maximum number of user equipments per base station and/or on the maximum number of user equipments per cell and/or on the maximum power of the base station.

12. A method to communicate the mobile radio telecommunication signal (2) according to one of the preceding claims.

13. A base station (16, 24) configured to transmit the mobile radio telecommunication signal (2) according to the claims 1 to 12 and/or configured to execute the method according to claim 12.

14. A user equipment (18-22) configured to receive the mobile radio telecommunication signal (2) according to the claims 1 to 11 and/or configured to execute the method according to claim 12.

15. A mobile radio telecommunication system (14) comprising the base station (16, 24) according to claim 13 and the user equipment (18-22) according to claim 14.
